**Europäisches Patentamt**

**European Patent Office**

**Office européen des brevets**

(19)

(11) Veröffentlichungsnummer: **0 305 685 B1**

(12) # EUROPÄISCHE PATENTSCHRIFT

(45) Veröffentlichungstag der Patentschrift:
28.11.90

(51) Int. Cl.⁵: **H02K 41/00, H02K 49/10**

(21) Anmeldenummer: **88110981.3**

(22) Anmeldetag: **08.07.88**

(54) **Berührungsloser Linearantrieb.**

(30) Priorität: **03.09.87 DE 3729510**

(43) Veröffentlichungstag der Anmeldung:
**08.03.89 Patentblatt 89/10**

(45) Bekanntmachung des Hinweises auf die Patenterteilung:
**28.11.90 Patentblatt 90/48**

(84) Benannte Vertragsstaaten:
**AT BE CH DE ES FR GB GR IT LI LU NL SE**

(56) Entgegenhaltungen:
**DE-A- 2 250 825**
**DE-B- 1 302 033**
**FR-A- 2 206 620**
**FR-A- 2 259 472**
**US-A- 2 096 906**
**US-A- 3 903 808**

**RUSSIAN ENGINEERING JOURNAL, Band 53,**
**Nr. 4, 1973, Seiten 27-29, Melton Mowbray, GB; V.F.**
**KRASNIKOV: "Mechanisms and transmissions with**
**magnetic links"**

(73) Patentinhaber: **Schuster, Peter,**
**Prinzregentenstrasse 41, D-8201 Raubling(DE)**

(72) Erfinder: **Schuster, Peter, Prinzregentenstrasse 41,**
**D-8201 Raubling(DE)**

(74) Vertreter: **Petra, Elke, Dipl.-Ing. et al,**
**Tattenbachstrasse 9, D-8000 München 22(DE)**

## Beschreibung

Die Erfindung bezieht sich auf einen berührungslosen Linearantrieb nach dem Oberbegriff des Anspruches 1, wie er beispielsweise zum Antrieb von Magnet-Hängebahnen und Aufzügen Verwendung findet.

Ein solcher Linearantrieb ist aus der FR-A 2 206 620 bekannt. Es sind z. Z. mehrere Systeme von berührungslosen Linearantrieben bekannt.

So ist beispielsweise der sog. Linearmotor bekannt, bei welchem der Stator längs der Führungsbahn vorgesehen ist, während der Rotor am Fahrzeug angeordnet ist.

Ein anderes bekanntes System weist entlang der Führungsbahn Permanentmagnete auf, während am Fahrzeug ein Elektromagnet vorgesehen ist, welcher ständig seine Polarität wechselt, wodurch er sich an den Permanentmagneten entlang zieht.

Alle diese bekannten Antriebs-Systeme weisen den Nachteil auf, daß sie sehr viel elektrischen Strom verbrauchen, insb. weil zwischen Stator und Rotor ein relativ großer Luftspalt vorhanden ist. Der Stromverbrauch wächst jedoch mit dem Quadrat der Entfernung. Dazu geht noch relativ viel Energie durch Erzeugung von Wärme verloren.

Aus der DE-OS 31 20 328 ist ein Linearmotor bekannt, dessen Primärteil eine rotierende zylindrische Walze ist, auf deren Umfang Magnete schraubenförmig aufgebracht sind. Die Nord- und Südpole sind dabei als kontinuierliche Bänder ausgeführt, wodurch sich im Bereich der Zylinderoberfläche ein axial wanderndes Feld (Wanderfeld) bildet. Dieses schließt sich wegen der engen Aufeinanderfolge der Magnetpolbänder zum Teil zwischen den Polen kurz und nur ein relativ geringer Teil schließt sich über das Sekundärteil, in welchem zudem ein relativ hoher Wirbelstromanteil erzeugt wird. Die Wirtschaftlichkeit dieses bekannten Motors ist daher relativ gering.

Zudem ist aus der DE-PS 3 428 684 ein magnetisches Getriebe bekannt, dessen Primärteil als Magnetrad ausgebildet ist, welches mit einem zahnförmig genuteten Sekundärteil zusammenwirkt. Auch dieser magnetische Aufbau weist einen relativ geringen Wirkungsgrad auf, da immer nur der Magnetkreis von zwei der am Radumfang aufeinanderfolgenden Pole über das Sekundärteil geschlossen wird.

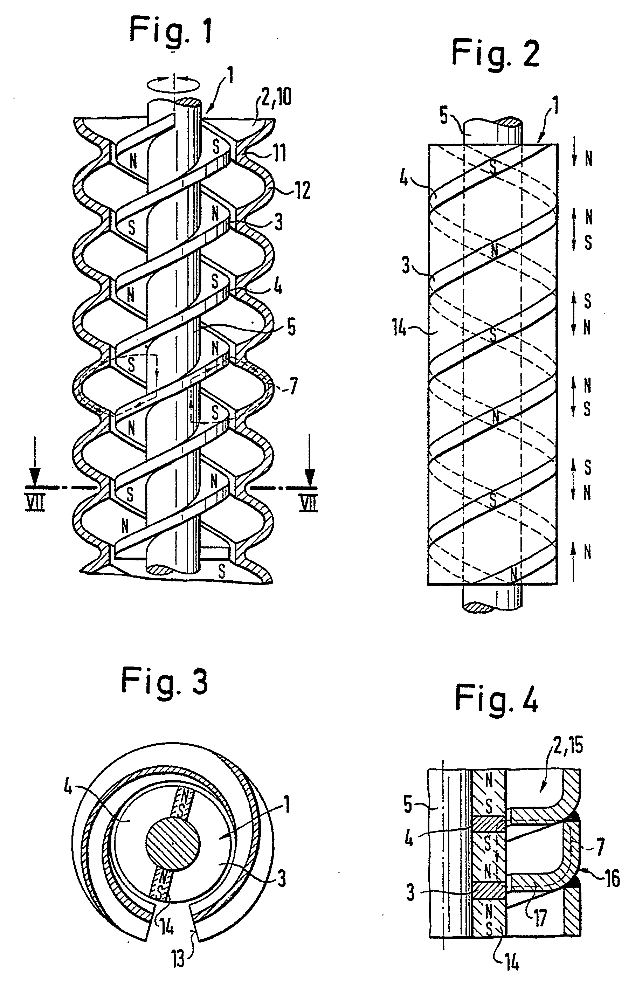

Auch ist aus dem "Russian Engineering Journal" Band 53, Nr. 4, 1973, Seiten 27–29, insbesondere Figur 2 (Krasnikov) ist ein Linearantrieb bekannt, dessen rotierendes Primärteil/Transportteil eine stationäre, rotierende zylindrische Walze ist, auf deren Umfang eine Doppelwendel aus weichmagnetischem Material mit dazwischen axial orientierten Permanentmagneten, angeordnet ist. Ein auf verhältnismäßig kurzer Strecke linear hin- und herbewegbarer weichmagnetischer Sekundärteil/Transportteil ist als U-Profilteil ausgebildet, dessen Schenkel sich den zwei Wendeln in einem Tangentialbereich des Rotors bis auf einen geringen Luftspalt nähern. Durch Rotation der Doppelwendel-Walze verursacht das über die Wendeln und das U-Profil geschlossene Magnetfeld eine lineare Bewegung des U-Profilteils. Da jedoch immer nur ein einziger, mit einer Reihe Permanentmagneten versehener Doppelwendelsektor mit dem U-Profil zusammenwirkt, sind die Bewegungskräfte, die am U-Profilteil wirksam werden, und somit der Wirkungsgrad relativ gering. Zudem ist durch die stationäre Anordnung des rotierenden Primär- bzw. Führungsteils auch die Transportweglänge aus wirtschaftlichen Gründen relativ begrenzt und somit nicht geeignet, für beispielsweise den Transport größerer Lasten entlang eines langen Weges, dienen zu können.

FR-A 2 206 620 (Alsthom) genannt, da auch in diesem Dokument ein aus einem axial geschlitzten Rohr bestehender ferromagnetischer Stator (Führungsteil) mit innerer Doppelwendel beschrieben wird, in welchem sich ein an einem Vehikel befestigter und mindestens einen Dauermagneten aufweisender Induktor (Transportteil) sich koaxial drehend, bewegt. Dabei steht immer eine Stator-Wendel ein Rotor-Magnetpol gegenüber. Die beiden ferromagnetischen Wendeln des Führungsteils/Stators sind um 180° phasenverschoben angeordnet, so daß diese sich praktisch diagonal gegenüberstehen. Im Transportteil/Rotor ist der Magnet in diagonaler Polausrichtung so angeordnet, daß am Rotorumfang, jeweils diagonal gegenüberliegend, sich Rotorpole und Statorwendeln mit Luftspalt gegenüberstehen. Wie der magnetische Rückschluß im Falle der Ausführung mit Betonrohr und ferromagnetischen Wendeln vor sich gehen soll, ist nicht klar erkennbar. Jedenfalls laufen die beiden "N- bzw. S-Wendeln" des Stators einzeln, unabhängig voneinander, praktisch nebeneinander her, ohne einen direkten magnetischen Rückschluß der Magnete über die Wendeln zu ermöglichen. Der Wirkungsgrad dieser bekannten Einrichtung ist somit relativ gering, da bei Verwendung von einem oder mehreren in diagonaler Ausrichtung angeordneten Permanentmagneten nur relativ geringe Magnetkräfte wirksam werden, wodurch die erzeugte motorische Kraft verhältnismäßig klein ist.

Aufgabe der Erfindung ist es, einen berührungslosen Linearantrieb bereitzustellen, welcher sehr wirtschaftlich in Aufbau und Funktion ist.

Diese Aufgabe wird durch einen berührungslosen Linearantrieb gemäß Anspruch 1 gelöst.

Demgemäß weist der erfindungsgemäße Linearantrieb auch am Transportteil/Rotor Doppelwendeln auf, wobei die Permanentmagnete im Transportteil/Rotor so angeordnet sind, daß die beiden relativ eng aufeinanderfolgenden Wendeln entgegengesetzt polarisiert (N–S) sind und in dem durch eine Doppelwendel und den magnetischen Rückschluß gebildeten magnetischen Kreis ein konstantes Magnetfeld erzeugt wird. Hierdurch wird erreicht, daß eine sehr enge N–S polarisierte Rotor-Doppelwendel einer eben so engen ferromagnetischen Stator-Doppelwendel gegenübersteht, die den Magnetrückschluß bildet, wodurch ein sehr enger magnetischer Kreis geschlossen wird, der einen hohen Wirkungsgrad ermöglicht. Zudem besteht die Möglichkeit, durch axiale Anordnung der Permanentmagneten zwischen den ferromagnetischen Rotorwen-

deln oder radiale Anordnung in den Rotorwendeln selbst sehr viel hochwirksames Magnetmaterial in den Rotor einzuarbeiten, wodurch für lineare Antriebe bislang unerreicht hohe motorische Kräfte erhalten werden können.

In Weiterbildung des Erfindungsgedankens können im Führungsteil fensterähnliche Aussparungen vorgesehen sein, wobei sich jedoch die Aussparungen über den Wendeln befinden und der Magnetschluß über die dazwischen sich erstreckenden Stege vor sich geht.

Das Führungsteil kann auch eine im wesentlichen wellenförmige Profilierung mit in Transportrichtung aufeinanderfolgenden Wellenbergen und Wellentälern aufweisen. Dabei ist von Vorteil, wenn die Spitzen der den Wendeln jeweils angenäherten Wellenberge im wesentlichen parallel zur Mantelfläche und im wesentlichen auf gleiche axiale Erstreckung der Wendeln abgetragen sind, wodurch der Magnetfluß optimiert wird.

Das Profilteil kann schließlich im wesentlichen senkrechte, zur Transportteil-Doppelwendel weisende Rippen besitzen, so daß der Fuß einer Rippe einer Transportteil-Wendel mit nur geringem Abstand (Spalt) gegenübersteht.

Die Rippen können dabei auf einem glatten Trägerteil aufgebracht bzw. aufgeschweißt sein. Das Führungsteil kann auch aus einzelnen L-Profilelementen zusammengesetzt sein, wobei jeweils die axial weisenden Schenkel als Körper z.B. aneinander geschweißt sind und die dazu senkrechten Schenkel im wesentlichen radial zu dem Transportteil verlaufen. Schließlich kann das Führungsteil aus einzelnen U-Profilelementen zusammengesetzt sein, die jeweils mit ihren Schenkeln in axialer Folge aufeinanderliegen oder aus T-Profilen, die entsprechend mit ihrem Mittelschenkel radial nach innen weisend angeordnet sind. Diese geschweißte Ausbildungs- bzw. Herstellungsweise des verrippten Führungsteiles ist besonders vorteilhaft und wirtschaftlich.

Selbstverständlich kann auch das wellige Profilteil aus Einzelelementen zusammengeschweißt sein, bzw. die Profilrohre können jeweils als geschweißte Endlosrohre aus L- oder U-Profilband ausgestaltet sein.

Gemäß einer anderen Weiterbildung des Erfindungsgedankens sind die beiden Wendeln des Transportteils um einen weichmagnetischen Kern angeordnet und die Wendeln entgegengesetzt polarisiert sind. Hierfür sind die Magnete in den Wendeln mit radialer Orientierung so vorgesehen, daß bei der einen Wendel jeweils die Südpole und bei der zweiten Wendel die Nordpole nach außen gerichtet sind. Somit kann von einer Südpol- und von einer Nordpolwendel gesprochen werden. Der durch diese Anordnung hervorgerufene Magnetfluß hat folgenden Lauf: Er kommt aus dem Nordpol heraus, überwindet den Luftspalt zwischen Transportteil-Wendel und Führungsteil, geht dann z.B. in eine Rippe des Führungsteils und kommt in der nächsten Rippe wieder heraus. Danach überwindet er den nächsten Luftspalt und geht in den Südpol der nächsten Transportteil-Wendel hinein. Die inwendigen Pole der Transportteil-Wendeln schließen sich durch den weichmagnetischen Kern. So ist der gesamte Kreislauf geschlossen. Die Tranportteil-Wendeln haben eine vorbestimmte Distanz zu dem Führungsteil. Sie können erfindungsgemäß durch einen Elektromotor in Rotationen versetzt werden und sind bei einem vorzugsweisen Ausführungsbeispiel ama Fahrzeug montiert. Durch die Rotation der Transportteil-Wendeln entsteht ein konstantes Magnetfeld, welches das Fahrzeug verschiebt. Da in dieser Ausführungsweise das Führungsteil fest an der Fahrbahn bzw. bei Magnet-Hängebahnen fest am Tragprofil angeordnet ist, schrauben sich die je eine Schnecke bildenden Transportteil-Wendeln an diesem entlang und erzeugen so den nötigen Antrieb für das Fahrzeug.

In einer zweiten Ausführung des Transportteils können dem Wendeln aus weichmagnetischem Material gefertigt sein, während der Kern aus nichtmagnetischem Material besteht. Die Permanentmagnete sind hierbei im Zwischenraum zwischen den Wendeln in im wesentlichen axialer Orientierung angeordnet. Dabei sind die Magnete des einen Zwischenraums mit z.B. dem Nordpol in die Transportrichtung weisend eingebracht, während der andere Zwischenraum mit südorientierten Magneten ausgestattet ist, so daß jeweils eine Wendel von gleichen Polen, also jeweils eine Südwendel von Südpolen flankiert wird. Dadurch findet in den Wendeln eine hohe Konzentration von Magnetlinien statt, wodurch der Wirkungsgrad der Einrichtung sehr stark erhöht werden kann.

Die durch den Linearantrieb hervorgerufene Transportbewegung kann kontinuierlich in einer Richtung stattfinden, wenn beispielsweise die Transportteil-Doppelwendeln kontinuierlich in einer Richtung rotiert werden. Es kann jedoch auch eine Hin -und Herbewegung, wie sie insbesondere im Werkzeugmaschinenbau verwendet wird, erzeugt werden, indem das Transportteil Verschwenkbewegungen im Uhrzeigensinn bzw. im Gegenuhrzeigersinn durchführt.

Das Transportteil kann beispielsweise über einen Elektromotor in an sich bekannter Weise in Drehbewegung versetzt werden. Es besteht jedoch auch die Möglichkeit von anderen sich drehenden Elementen beispielsweise des Fahrzeugs oder der Werkzeugmaschine eine Drehbewegung über bekannte Übertragungselemente auf das Transportteil überzuleiten.

Schließlich ist von Vorteil, wenn am Doppelwendel-Transportteil eine Sicherheitswendel aus nichtmagnetischem Stahl vorgesehen ist. Dies ist an sich eine passive Wendel, die nicht mehr als eine oder maximal zwei Windungen aufweisen muß. Die Sicherheitswendel ragt dabei radial verhältnismäßig tief in das Führungsteil hinein und wirkt mit dessen ebenfalls radialen Rippen in Art einer Reibungs-Bremse zusammen. Hierdurch kann die Überbelastung des Rotors dieser nicht durchrutschen, da die Sicherheitswendeln auf den Rippen des Führungsteiles aufsetzen und die Durchrutschbewegung abbremsen. Dabei ist der Abstand zwischen den Führungsteil-Rippen und der Sicherheitswendel so auszulegen, daß der Rotor über die Sicherheitswendel auf den Führungssteil-Rippen aufsetzt kurz bevor das Magnetfeld abreißt. Dies ist der Fall bei einer ca. 90prozentigen Belastung.

Bei der Ausführung des mit radial orientierten Magneten ist vorteilhaft und gleichzeitig platzsparend, die Sicherheitswendel zwischen den Magnetwendeln am Kern vorzusehen. Bei axial orientierten Magneten wiederum ist dies nicht möglich. Hier ist es sinnvoll, die Sicherheitswendeln an einem Kernabschnitt außerhalb der Polwendeln vorzusehen. Dabei wird eine größere Festigkeit erzielt, wenn in diesem Bereich der Kerndurchmesser auf den größeren Druchmesser der Polwendeln ausgelegt wird, so daß die Sicherheitswendel im wesentlichen nur die die Höhe der Führungsteil-Rippen besitzt.

Der erfindungsgemäße Antrieb hat gegenüber dem klassischen Linearmotor große Vorteile. Die Transportteil-Schnecken können von einem normalen Elektromotor angetrieben werden, welcher im Idealfall arbeitet, also wo Rotor und Stator den kleinstmöglichen Spalt aufweisen. Der Stromverbrauch ist immer konstant und nicht von der Größe eines Luftspalts abhängig.

Desweiteren ist als sehr vorteilhaft die optimale und sehr wirtschaftliche Einsetzbarkeit des erfindungsgemäßen Linearmotors anzusehen. Denn dieser Motor kann für Transportbewegungen in praktisch jeder beliebigen Richtung eingesetzt werden. So ist sein Einsatz für horizontale Transporte optimal, wie z.B. für Hängebahnen, Tore, Werkzeugemaschinen oder andere Maschinen, bei welchen Relativbewegungen der ganzen Maschinen oder innerhalb der Maschinen durchzuführen sind.

Auch der Einsatz des erfindungsgemäßen Motors für Vertikaltransporte ist von sehr großem Vorteil. Denn z.B. im Vergleich zu den in herkömmlicher Weise mit Transportkabeln arbeitenden Liften bzw. Aufzügen im Personen- oder Materialtransport, werden erfindungsgemäß keine zusätzlichen Auf- oder Unterbauten für Antriebe benötigt, wodurch sich große Platz- und Materialeinsparungen ergeben. So entfallen auch die ein relativ hohes Eigengewicht aufweisenden Seile bzw. Kabel, wodurch z.B. im Untertagebau in Stollen von großer Tiefe durchgehend gefahren werden kann. Z.Zt. muß dort noch in mehreren, zueinander versetzten Abschnitten gefahren werden, was jeweils ein neues, komplettes Transportsystem mit sämtlichen Kosten erfordert.

Nachfolgend wird die Erfindung anhand der in der Zeichnung dargestellten Ausführungsbeispiele näher erläutert.

Es zeigt:

Fig. 1 einen erfindungsgemäßen Linearantrieb in erster Ausführung mit einer Transportteil-Doppelwendel und einem gewellten Rohr als Führungsteil,

Fig. 2 einen Schnitt II–II aus Fig. 1, die Anordnung der Magnete in den Wendeln zeigend,

Fig. 3 eine Transportteil-Doppelwendel in zweiter Ausführungsform mit weichmagnetischen Wendeln und dazwischen axial orientiert angeordneten Magneten,

Fig. 4 einen teilweisen Schnitt durch einen Linearantrieb in anderer Ausführung mit einer Doppelwendel gemäß Fig. 3 und einem aus L-Profilteilen zusammengesetzten,

Fig. 5 einen teilweisen Schnitt durch einen Linearantrieb weiterer Ausführungsform, mit einer Transportteil-Doppelwendel mit radial ausgerichteten Magneten, einem aus U-Profilteilen zusammengesetzten verrippten Führungsteil und einer Sicherheitswendel, und

Fig. 6 einen Schnitt wie in Fig. 5, jedoch mit einem Transportteil mit axial ausgerichteten Magneten.

Wie aus Fig. 1 zu ersehen ist, besteht ein berührungsloser Linearantrieb in erster erfindungsgemäßer Ausführung aus einer eine Schnecke bildenden Transportteil-Doppelwendel 1 mit einem weichmagnetischen Kern 5, um welchen in gleichem Abstand zueinander zwei Wendeln 3, 4 angeordnet sind. Diese sind aus permanentmagnetischem Material gefertigt, oder bestehen aus Permanentmagnetstücken. Die Polarität ist dabei derart vorgesehen, daß sie von einer Wendel zur anderen gegensinnig ist, so daß eine Nord-Wendel 3 und eine Südwendel 4 gebildet werden. Hierdurch stehen jeweils in Längsrichtung gesehen, abwechselnd immer ein Nordpol und ein Südpol.

Die Wendeln 3, 4 können in ersten Ausführungsform voll aus permanentmagnetischem Material gefertigt sein, während andererseits die Möglichkeit besteht, kleine Stabmagnete in radialer Ausrichtung so in unmagnetisches Material einzubetten, daß insgesamt eine Doppelwendel mit weichmagnetischem Kern entsteht. Diese Einbettung kann in verschiedenen an sich bekannten Herstellungsweisen bereitgestellt werden, wie beispielsweise durch Eingießen oder Einsintern.

Um die Transportteil-Doppelwendel 1 ist ein im wesentlichen konzentrisch angeordnetes gewelltes Rohr vorgesehen, welches in axialer Aufeinanderfolge Wellenberge 11 und Wellentäler 12 aufweist. Dabei sind die Wellen mit gleichem Schritt und gliecher Neigung eingebracht, wie die Wendeln 3, 4 des Transportteils 1 ebenfalls Doppelwendel bildend. Transportteil und gewelltes Führungsteil-Rohr sin deinander so zugeordnet, daß jeweils eine Transportteil-Wendel einem Führungsteil-Wellenberg, welcher eine abgeflachte Spitze aufweist, gegenübersteht.

Wie insbesondere aus Fig. 2 ersichtlich ist, weist das Rohr 10 einen schlitzförmigen axialen Durchbruch 13 auf, durch welchen die hier nicht eingezeichnete Lagerung bzw. die Befestigungselemente für das Transportteil 1 hindurchreichen.

In Fig. 3 ist ein Transportteil dargestellt, bei welcher die Wendeln 3, 4 aus weichmagnetischem Material gebildet sind und sich um einen nichtmagnetischen Kern 5 winden. In den Zwischenräumen zwischen den Wendeln 3, 4 sind Permanentmagnete in axialer Orientierung angeordnet, wie dies insbesondere aus Fig. 4 ersichtlich ist. Die Permanentmagnet 14 sind dabei mit wechselnder Polung eingefügt, so daß immer ein Zwischenraum mit Nordorientierung von einem Zwischenraum mit Südorientierung gefolgt wird. Hierdurch wird jeweils eine Wendel von gleichen Magnetpolen flankiert, wodurch sich gleichzeitig die Polung der Wendeln ergibt. Dies bedingt eine sehr hohe Konzentration der Magnetlinien 7, die im wesentlichen den in Fig. 4 gestrichelt eingezeichneten Verlauf aufweisen.

Bei dem in Fig. 4 nur in einem relativ kleinen Detail, dargestellten Ausführungsbeispiel ist das Führungsteil 2 als verripptes Rohr 15 ausgebildet. Die radial weisenden Rippen 17 sind dabei jeweils Teil eines L-Profils 16, welches zu einem Endlosrohr durch Schweißung zusammengefügt wurde.

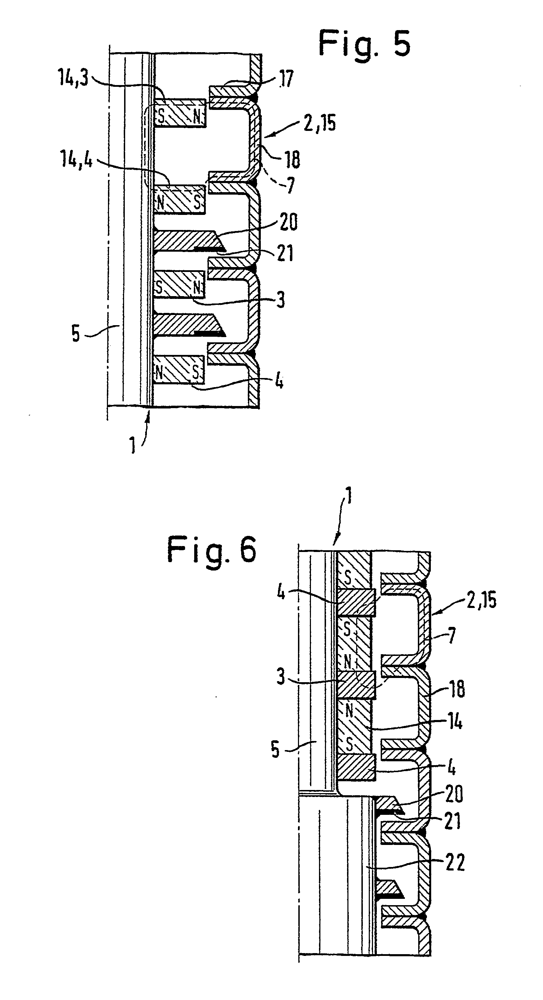

In dem Ausführungsbeispiel nach Fig. 5 ist die Transportteil-Doppelwendel 1 in gleicher Weise wie in Figuren 1 und 2 mit radial ausgerichteten Magneten 14 versehen. Das Führungsteil 2 ist in ähnlicher Weise wie bei dem Ausführungsbeispiel nach Fig. 4 zusammengesetzt, wobei U-Profile verwendet wurden, die in axialer Aufeinanderfolge mit ihren Schenkeln aufeinanderliegend zusammengeschweißt sind. Die zusammengeschweißten Schenkel bilden jeweils eine Rippe 17 des so gefertigten Führungsteiles 2.

Zwischen den Polwendeln 3, 4 der Transportteil-Doppelwendel 1 ist eine Sicherheitswendel 20 aus nichtmagnetischem Stahl vorgesehen, die ein bis zwei Windungen aufweisen kann. Die Wendel 20 ragt dabei relativ weit radial ausladend zwischen die Rippen 17 des Führungsteiles 2 bzw. 15 hinein und weist an seiner mit den Rippen 17 zusammenwirkenden Bremsfläche einen Bremsbelag 21 auf. Die Wendel 20 ist auf dem im wesentlichen stabförmigen Kern 5 aus weichmagnetischem Material des Transportteils 1 z.B. durch Schweißung befestigt.

Schließlich zeigt Fig. 6 ein weiteres Ausführungsbeispiel, bei dem das Transportteil 1 im wesentlichen in gleicher Weise wie in Fig. 3 dargestellt, ausgebildet ist und zwar mit axial ausgerichtetem Magneten 14. Dabei ist das Führungsteil 2, 15 wie in Fig.5 aus U-Profilen zusammengeschweißt. Hier ist ebenfalls eine Sicherheitswendel 20 vorgesehen, die jedoch an einem außerhalb des Kernabschnittes mit den Polwendeln 3, 4 des Transportteils 1 angeordnet ist. Dies kann beispielsweise das Rotorende sein. Hierfür ist der Kern 5 mit einer Stufe 22 versehen, die einen größeren Durchmesser aufweist, wobei dieser Durchmesser ca. das Durchmessermaß der Polwendeln 3, 4 besitzt. Die aktive Bremsfläche der Sicherheitswendel 20 ist ebenfalls mit einem Bremsbelag 21 versehen, der bei diesem Ausführungsbeispiel praktisch die gesamte aktive Stirnfläche der Sicherheitswendel bedeckt, während beim Ausführungsbeispiel nach Fig. 5 der Bremsbelag nur einen Teil der axial weisenden Sicherheitswendel-Bremsfläche ausmacht. Die Sicherheitswendeln 20 sind jeweils so im Verhältnis zu den Rippen 17 beabstandet, daß bereits bei 90 Prozent der Maximalbelastung die Sicherheitswendel 20 auf der Rippe 17 aufsetzt und die Bremsung beginnt, ohne daß zuvor das Magnetfeld abreißt.

Bezugszeichenliste

1. Transportteil (Schnecke)
2. Führungsteil
3. Nordwendel
4. Südwendel
5. Kern
7. Magnetfeldlinien
10. gewelltes Rohr
11. Wellenberg
12. Wellental
13. Durchbruch
14. Magnet
15. verripptes Rohr
16. L-Profil
17. Rippe
18. U-Profil
19. Kern-Stufe
20. Sicherheitswendel
21. Brems-Belag

**Patentansprüche**

1. Berührungsloser Linearantrieb,
- mit mindestens einem linear ausgerichteten, rohrförmigen, ortsfesten Führungsteil (2) aus ferromagnetischem Material, an dessen Mantel ferromagnetische Doppelwendeln vorgesehen sind, insgesamt ein Profilteil bildend,
- mit mindestens einem entlang des Führungsteils beweglichen und in diesem koaxial angeordnet rotierenden und mindestens einen Dauermagneten (14) enthaltenden Transportteil (1),
- wobei je eine Wendel des Führungsteils einem Pol des mindestens einen Transportteil-Magneten zugeordnet ist, dadurch gekennzeichnet,
- dass das rotierende Transportteil (1) als Pole den Doppelwendeln des Führungsteiles entsprechende Doppelwendeln (1 bzw. 3, 4) aus ferromagnetischem Material aufweist, die um einen Kern (5) angeordnet sind,
- dass in dem durch die entsprechenden Wendeln beider Teile gebildeten magnetischen Kreis ein konstantes Magnetfeld erzeugt wird,
- und dass die Permanentmagneten (14) im Transportteil (1) so angeordnet sind, dass die beiden Wendeln (3, 4) entgegengesetzt polarisiert sind.

2. Linearantrieb nach Anspruch 1, dadurch gekennzeichnet, daß das Führungsteil (2) fensterähnliche Aussparungen in Doppelwendel-Anordnung aufweist, wobei die axial zwischen den Aussparungen befindlichen wendelförmigen Stege gleich beabstandet sind, wie die Wendeln (3, 4) des Transportteils (1).

3. Linearantrieb nach Anspruch 1, dadurch gekennzeichnet, daß das Führungsteil (2) eine wellenförmige Profilierung mit in Transportrichtung aufeinanderfolgenden Wellenbergen (11) und Wellentälern (12) aufweist, die jeweils gleich beabstandet sind wie die Wendeln (3, 4).

4. Linearantrieb nach Anspruch 1, dadurch gekennzeichnet, daß das Führungsteil (2) im wesentlichen senkrechte, zur Doppelwendel (3, 4 des Transportteils (1) weisende Rippen (17) besitzt, wobei die Rippen (17) gleich beabstandet sind wie die Wendeln (3, 4).

5. Linearantrieb nach Anspruch 3, dadurch gekennzeichnet, daß die Spitzen der Wellenberge (11) im wesentlichen parallel zur äußeren Zylinder-Manteitfläche der Transportteil-Wendeln (3, 4) und im wesentlichen auf gleiche axiale Längenerstreckung der Wendeln (3, 4) abgetragen sind.

6. Linearantrieb nach Anspruch 1, dadurch gekennzeichnet, daß die Doppelwendeln (11, 17) des Führungsteils (2) in im wesentlichen gleicher Richtung geneigt angeordnet sind wie die Wendeln (3, 4) des Transportteils (1).

7. Linearantrieb nach Anspruch 4, dadurch gekennzeichnet, daß die Rippen (17) des Führungsteils (2) jeweils der eine Schenkel von L-Profilen sind, die jeweils mit dem anderen Schenkel aufeinanderfolgend zusammengeschweißt angeordnet sind.

8. Linearantrieb nach Anspruch 4, dadurch gekennzeichnet, daß die Rippen (17) des Führungsteils (2) jeweils aus den flächig außen aufeinanderliegenden Schenkeln zweier in Transportrichtung aufeinanderliegend angeordneten und miteinander unlösbar verbundenen U-Profilen (18) gebildet sind.

9. Linearantrieb nach Anspruch 7 und 8, dadurch gekennzeichnet, daß bei der Ausbildung des Führungsteils (2) als verripptes Rohr (15) das L- bzw. U-Profil (16 bzw. 18) zu einem Endlosrohr mit Innenwendel-Rippen (17) zusammengeschweißt ausgebildet ist.

10. Linearantrieb nach Anspruch 1, dadurch gekennzeichnet, daß die Magnete (14) in radialer Orientierung in den Wendeln (3, 4) des Transportteils (1) angeordnet sind und der Kern (5) aus weichmagnetischem Material gefertigt ist.

11. Linearantrieb nach Anspruch 1, dadurch gekennzeichnet, daß die Wendeln (3, 4) aus weichmagnetischem Material gefertigt sind, während der Kern (5) aus nichtmagnetischem Material besteht, und daß die Magnete (14) im Zwischenraum zwischen den Wendeln (3, 4) in axialer Orientierung angeordnet sind.

12. Linearantrieb nach Anspruch 1, dadurch gekennzeichnet, daß mindestens eine Sicherheitswendel (20) aus nichtmagnetischem Stahl am Doppelwendel-Transportteil (1) vorgesehen ist, die maximal zwei Windungen aufweist und im wesentlichen auf die gesamte Erstreckung der Rippen (11, 17) in das Rohr-Profilteil (10, 16, 18) hineinreicht und mit diesen Rippen (11, 17) des Profilteiles (10, 16, 18) zusammenwirkt.

13. Linearantrieb nach Anspruch 12, dadurch gekennzeichnet, daß die Sicherheitswendel (20) zwischen den Pol-Wendeln (3, 4) mit radial orientierten Magneten (14) am Kern (5) angeordnet ist.

14. Linearantrieb nach Anspruch 12, dadurch gekennzeichnet, daß bei axial orientierten Magneten die Sicherheitswendel (20) an einem außerhalb der Magnetwendelzone (3, 4) liegenden Abschnitt des Kerns (5) vorgesehen ist.

**Claims**

1. Non-contacting linear drive,
– having at least one tubular stationary guiding section of a ferromagnetic material in linear orientation, at whose cirumferential surface ferromagnetic double helices are provided, both cooperating to constitute a section element,
– having at least one conveyor section movable along said guiding section, which is disposed coaxially in said guiding section for rotary movement and contains at least one permanent magnet,
– with one helix each of said guiding section being associated with one pole of said at least one conveyorsection magnet, characterized in
– that said rotary conveyor section (1), too, includes double helices (1 or 3, 4) of ferromagnetic material which are disposed around score (5),
– that a constant magnetic field is generated in the magnetic circuit constituted by a double helix and by a magnetic return path,
– and that said permanent magnets (14) are so disposed in said conveyor section (1) that the two helices (3, 4) present opposite polarities.

2. Linear drive according to Claim 1, characterized in that said guiding section (2) has window-like recesses in a double-helix array, with the helical webs extending axially between the recesses presenting the same spacing as the helices (3, 4) of said conveyor section (1).

3. Linear drive according to Claim 1, characterized in that said guiding section (2) presents a corrugated profile with wave crests (11) and wave troughs (12) in succession in the direction of conveyance, with the spacing between said crests and troughs equalling the spacing between said helices (3, 4).

4. Linear drive according to Claim 1, characterized in that said guiding section (2) includes substantially vertical ribs (17) oriented towards the double helix (3, 4) of said conveyor section (1), the spacing between said ribs (17) equalling the spacing between said helices (3, 4).

5. Linear drive according to Claim 3, characterized in that the tops of said wave crests (11) are disposed substantially in parallel relationship with the outside cylindrical circumferential surface of the conveyor-section helices (3, 4) and are substantially reduced to achieve the same axial extension of said helices (3, 4).

6. Linear drive according to Claim 1, characterized in that the double helices (11, 17) of said guiding section (2) are disposed at an inclination substantially corresponding to the slope of the helices (3, 4) of said conveyor section (1).

7. Linear drive according to Claim 4, characterized in that each of the ribs (17) of said guiding section (2) constitutes one leg of L-sections which are so provided that they are welded to the other leg in succession.

8. Linear drive according to Claim 4, characterized in that each of the ribs (17) of said guiding section (2) is constituted by the legs of two U-sections (18), which legs are superimposed in flat relationship at the outside and belong to said two U-section which are disposed in superimposed relationship in the direction of conveyance and are undetachably interconnected.

9. Linear drive according to Claims 7 and 8, characterized in that with the guiding section (2) being designed as a ribbed tube (15) the L- or U-section (16, or 18), respectively, is so designed that it is welded to ribs (17) of the inner helix so as to form an endless tube.

10. Linear drive according to Claim 1, characterized in that the magnets (14) are disposed with radial extension in the helices (3, 4) of said conveyor section (1) and that the core (5) is made of a soft mag- tion (1) and that the core (5) is made of a soft magnetic material.

11. Linear drive according to Claim 1, characterized in that the helices (3, 4) are made of a soft magnetic, material whilst the core (5) consists of a nonmagnetic material, and that the magnets (14) are disposed with axial orientation ia the interstice between said helices (3, 4).

12. Linear drive according to Claim 1, characterized in that at least one safety helix of nonmagnetic steel is provided at the double-helix conveyorsection (1), which helix presents two turns at maximum and projects into said tubular section element (10, 16, 18) substantially over the entire extension of the ribs (11, 17) so as to cooperate with these ribs (11, 17) of said section element (10, 16, 18).

13. Linear drive according to Claim 12, characterized in that said safety helix (20) is disposed at the core (5) between the pole helices (3, 4) with radially extending magnets (14).

14. Linear drive according to Claim 12, characterized in that with axially extending magnets the safety helix (20) is provided at a core portion (5) located outside said magnetic helix zone (3, 4).

Fig. 1

Fig. 2

Fig. 3

Fig. 4

# Fig. 5

# Fig. 6